# FASCICULE DE BREVET EUROPEEN

(11) **EP 3 642 465 B1**
(45) Date de publication et mention de la délivrance du brevet: **12.01.2022**
(21) Numéro de dépôt: 18737688.4
(22) Date de dépôt: 19.06.2018
(51) Int. Cl.: F02C 6/02, F02C 6/18, F02C 3/10, F02C 7/08

(54) **AGENCEMENT DE DEUX TURBOMOTEURS**
ANORDNUNG VON ZWEI TURBOWELLENMOTOREN
ARRANGEMENT OF TWO TURBOSHAFT ENGINES

(30) Priorité: 22.06.2017 FR 1755718
(43) Date de publication de la demande: 29.04.2020
(73) Titulaire: Safran, 75015 Paris (FR)
(72) Inventeur: CIRLIGEANU, Radu, 77550 Moissy-Cramayel (FR)
(74) Mandataire: Brevalex
(86) Numéro de dépôt international: PCT/FR2018/051466
(87) Numéro de publication internationale: WO 2018/234684

(56) Documents cités:
- EP-A1- 2 963 247
- FR-A- 824 080
- US-A- 2 814 181
- US-A- 3 032 989

## Description

Le sujet de l'invention est un agencement de deux turbomoteurs. Le document US2814181 divulgue un turbomoteur selon l'art antérieur.

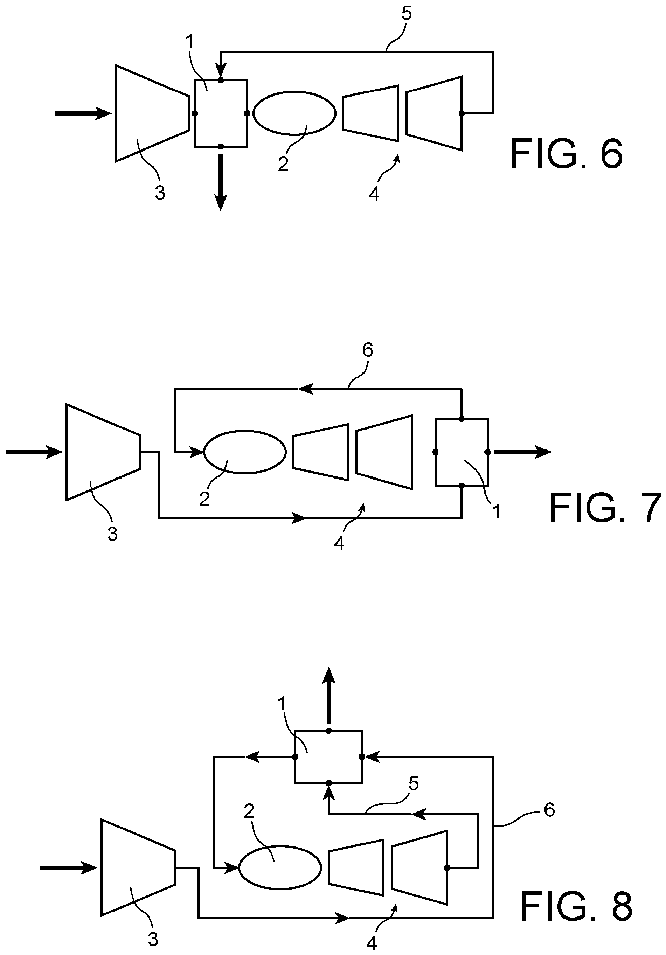

On connaît certains turbomoteurs, dits « turbomoteurs récupérés », dont le rendement est accru par un échangeur de chaleur qui récupère une partie de l'énergie calorifique des gaz d'échappement. Dans une conception connue qu'on a représentée à la figure 6, l'échangeur de chaleur 1 est disposé dans la section froide de l'écoulement du turbomoteur en amont de la chambre de combustion 2, par exemple entre un compresseur haute pression 3 et cette chambre. Les gaz de la combustion circulent ensuite dans une section chaude comprenant des turbines 4 et une canalisation 5 à la sortie des turbines 3. Le flux de gaz comprimé reçoit de l'énergie des gaz d'échappement en faisant passer la canalisation 5 par l'échangeur de chaleur 1, et il subit donc un préchauffage avant d'arriver à la chambre de combustion 2. Il est toutefois nécessaire de détourner et d'allonger le trajet des gaz dans la canalisation 5 pour les faire passer devant la chambre de combustion 2 de la machine, ce qui impose une grande augmentation des pertes de charge et amoindrit l'élévation du rendement qu'on attendait pour le turbomoteur.

Le même inconvénient de complication du trajet des gaz et d'accroissement de pertes de charge peut être reproché à des conceptions analogues à la précédente, où (figure 7) l'échangeur de chaleur 1 est à l'endroit de l'échappement, juste après les turbines 4, ou (figure 8) l'échangeur de chaleur 1 est placé à côté de la machine : dans la première de ces conceptions, l'air comprimé issu du compresseur haute pression 3 emprunte une canalisation 5 qui longe deux fois les turbines 4 et la chambre de combustion 2 pour atteindre l'échangeur de chaleur 1 avec le seul bénéfice d'éviter de modifier l'échappement de la turbomachine ; dans la seconde, on doit détourner à la fois les gaz comprimés, par une canalisation 6 analogue à celle de la figure 7, et les gaz d'échappement, par une canalisation 5 analogue à celle de la figure 6. On remarque que les canalisations 5 et 6 présentent aussi des coudes et des changements de direction nombreux, responsables de pertes de charge tout comme leurs grandes longueurs.

L'objet de l'invention est un agencement de turbomoteurs qui est d'abord apte à mieux profiter de l'échange de chaleur caractérisant ces procédés à récupération de chaleur de flux, en minimisant les allongements des canalisations de gaz nécessitées par l'échangeur de chaleur, les pertes de charge et les augmentations de masse et d'encombrement correspondants. En réduisant la longueur, la complexité et la masse des canalisations de gaz par rapport aux configurations classiques de turbomoteur récupéré comme celles des figures 6 à 8, plusieurs avantages peuvent être identifiés : une réduction du coût total de développement, la réduction de la masse totale et de l'encombrement, une amélioration des performances par l'augmentation du rendement thermique du cycle.

Et l'invention permet d'exploiter la fourniture d'énergie des turbomoteurs par un dispositif compact et simple, particulièrement utile dans des environnements resserrés comme des hélicoptères.

Sous une forme générale, l'invention comprend d'abord deux turbomoteurs dont chacun comprend une section froide comprenant un ou plusieurs compresseurs, axiaux ou centrifuges, mécaniquement liés ou pas, en amont d'une chambre de combustion et une section chaude comprenant une ou plusieurs turbines, axiales ou centripètes, en aval de la chambre de combustion, dans lequel les turbomoteurs sont couplés par deux échangeurs de chaleur, un premier des échangeurs de chaleur mettant en relation d'échange thermique un flux d'air sortant de la section froide d'un premier des turbomoteurs et un flux des gaz sortant de la section chaude d'un second des turbomoteurs, un second des échangeurs des chaleur mettant en relation d'échange thermique le flux des gaz sortant de la section chaude du premier des turbomoteurs et un flux d'air sortant de la section froide du second des turbomoteurs.

De plus, les axes de rotation des turbomoteurs sont parallèles et les sens de l'écoulement des flux le long des turbomoteurs sont opposés, les turbomoteurs comprennent chacun un dispositif de prise de puissance sortant des turbomoteurs, et l'invention est caractérisée en ce qu'elle comprend un arbre moteur relié à chacun des dispositifs de prise de puissance par une transmission mécanique respective comprenant chacune un arbre de transmission, les arbres de transmission étant en prolongement et en ce que l'arbre moteur s'étend entre les arbres de transmission et entre les parties principales des turbomoteurs dans une direction perpendiculaire aux turbomoteurs.

Et les turbomoteurs comprennent chacun une turbine libre dans la section chaude, sans liaison mécanique avec la section froide, mais comprenant un arbre de prise de puissance (qui permet d'extraire une puissance mécanique des gaz de combustion) sortant des turbomoteurs.

Au lieu de provoquer l'échange de chaleur entre deux portions successives d'un même flux de gaz passant par un turbomoteur, cet échange a lieu entre des turbomoteurs adjacents et entrelacés. Cette disposition implique des changements très réduits dans la constitution des turbomoteurs et donc des allongements de trajets des gaz et des pertes de charges réduits en conséquence. L'encombrement du système composé des deux turbomoteurs est réduit, les turbomoteurs couplés thermiquement l'un à l'autre étant aussi adjacents. Par rapport à des turbomoteurs sans récupération de chaleur, des gains de consommation de carburant de 18 % à 20 % par exemple, meilleurs que ceux des dispositifs conformes aux figures 6 à 8 (14 % à 18 % avec des échangeurs de chaleur usuels) peuvent être espérés en pratique.

Une plus grande indépendance des fonctionnements des turbomoteurs est atteinte, surtout quand les moyens de prise de puissance aboutissent à un arbre ou un autre mécanisme de sortie commun aux deux turbomoteurs, car l'entraînement de ce mécanisme de sortie reste possible même si, par exemple, un des turbomoteurs est mis à l'arrêt.

L'agencement de l'invention est donc exploité dans une configuration comprenant encore un arbre moteur relié à chacun des moyens de prise de puissance des turbines libres par une transmission mécanique respective, et qui permet donc de regrouper les puissances obtenues par ces turbines libres.

La portion de section froide de chacun des turbomoteurs où l'échangeur de chaleur est implanté peut correspondre à une zone située en aval d'un dernier des compresseurs - notamment un compresseur à haute pression - dans le sens de l'écoulement du fluide et adjacente à la chambre de combustion, et la portion correspondante de section chaude de chacun des turbomoteurs à un échappement en aval d'une dernière des turbines.

Une application importante envisagée pour l'invention est la propulsion d'hélicoptères, l'arbre de sortie de l'agencement étant l'arbre porteur de l'hélice de sustentation. Le dispositif occupe alors une place très réduite dans l'hélicoptère et n'impose pas, ou presque, de contrainte d'aménagement. On obtient alors un agencement particulièrement compact du dispositif.

Les différents aspects, caractéristiques et avantages de l'invention seront maintenant mieux mis en évidence par la description détaillée de certains de ses modes de réalisation, non exclusifs d'autres, au moyen des figures suivantes :
- la figure 1 illustre schématiquement l'invention ;
- la figure 2 représente une première réalisation possible de celle-ci ;
- les figures 2A, 2B et 2C illustrent certaines variantes de réalisation possibles ;
- les figures 3, 4 et 5, une deuxième réalisation, respectivement en isolé, et en vues de dessus et de côté dans un hélicoptère ;

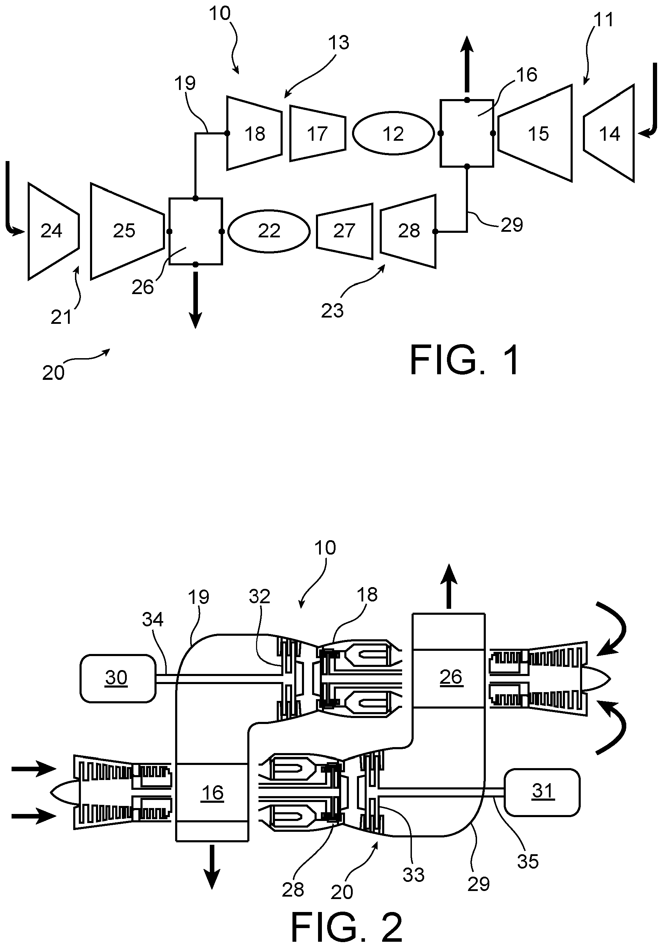

- et les figures 6, 7 et 8 déjà décrites illustrent des réalisations connues de turbomoteurs à échangeur de chaleur intégré. La figure 1 est une vue générale de l'invention. Elle représente deux turbomoteurs 10 et 20 dont chacun comprend une section froide 11 ou 21 en amont d'une chambre de combustion 12 ou 22, et une section chaude 13 ou 23 en aval de celle-ci. Les sections froides 11 et 21 comprennent classiquement des compresseurs (ici au nombre de deux : un compresseur à basse pression 14 ou 24 et un compresseur à haute pression 15 ou 25), ainsi qu'un échangeur de chaleur 16 ou 26 ; et les sections chaudes 13 et 23 comprennent une turbine à haute pression 17 ou 27, et une turbine à basse pression 18 ou 28 en aval de la précédente. Les sections froides 11 et 21, les sections chaudes 13 et 23 et les chambres de combustion 12 et 22 forment ce qu'on appellera des parties principales des turbomoteurs 10 et 20.

Les turbomoteurs 10 et 20 ont les parties principales rectilignes, placées côte à côte, parallèlement mais avec des flux de gaz en sens opposés, et avec un décalage axial faisant que la chambre de combustion 12 et/ou 22 de chacun d'eux s'étend à peu près devant la turbine à basse pression 28 ou 18 de l'autre turbomoteur 20 ou 10. Il est alors possible de pourvoir les échappements, en aval des dernières turbines, de canalisations coudées 19 et 29 qui, croisant l'autre turbomoteur 20 ou 10, font passer les gaz chauds issus des turbines à basse pression 18 et 28 par l'échangeur de chaleur 26 ou 16 de l'autre turbomoteur 20 ou 10 et donc de leur faire céder une partie importante de leur chaleur aux flux froids arrivant à la chambre de combustion 22 ou 12. Les canalisations 19 et 29 coudées sont courtes et, en imposant une seule modification de direction aux gaz grâce au coude unique, entraînent de faibles pertes de charge supplémentaires.

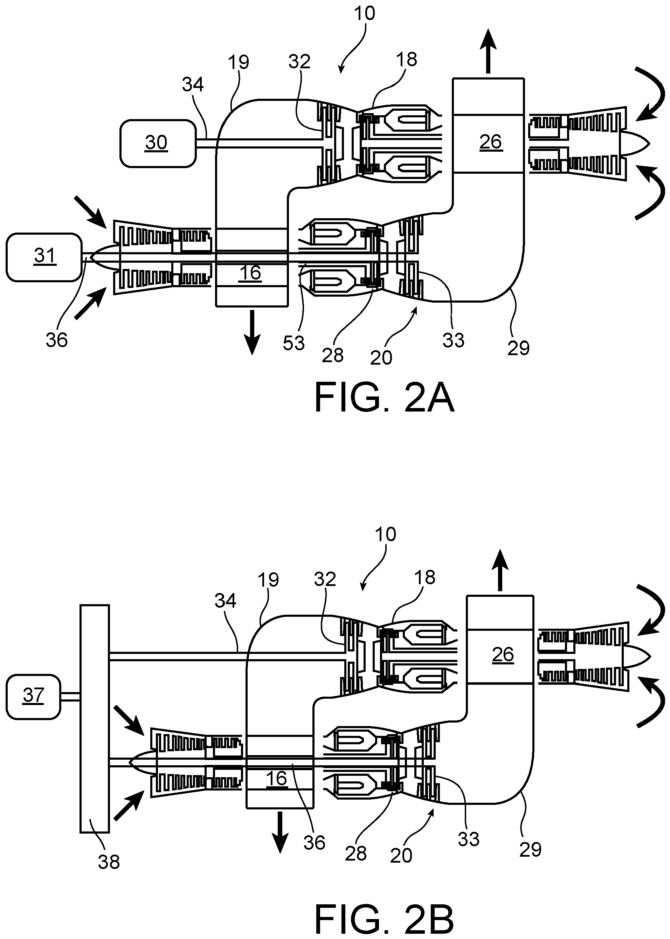

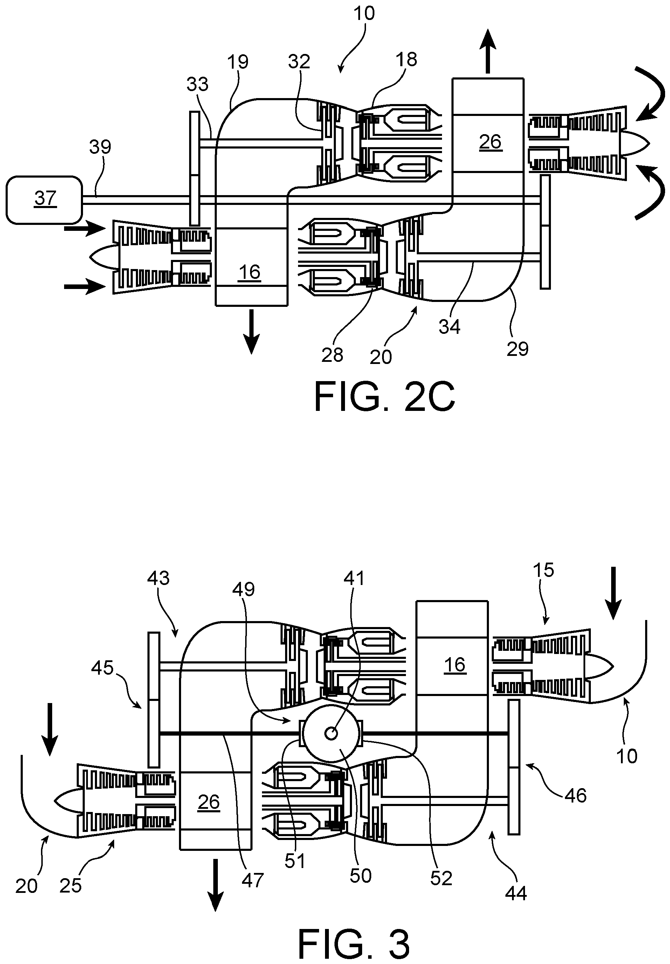

Il serait possible d'appliquer cet agencement à une turbo-génération de puissance électrique, qui pourrait être utilisée dans des véhicules comme des aéronefs ou des véhicules terrestres, concurremment à une motorisation classique effectuant la propulsion. Cette application est décrite à la figure 2. Les turbomoteurs 10 et 20 déjà décrits sont alors utilisés pour entraîner chacun un générateur électrique 30 ou 31 au moyen d'un dispositif comprenant une turbine libre 32 ou 33 dans la canalisation coudée 19 ou 29, juste en aval de la turbine à basse pression 18 ou 28 et en amont de l'échangeur de chaleur 16 ou 26, et qui entraîne un arbre de prise de puissance 34 ou 35 qui aboutit au générateur électrique 30 ou 31. Les turbines libres 32 et 33, qui sont ici les dernières turbines de turbomoteurs 10 et 20, sont appelées ainsi parce qu'elles sont dépourvues de liaison mécanique avec les autres parties des rotors des turbomoteurs : elles ne sont en particulier liées ni aux autres turbines, ni aux compresseurs. La plupart de l'énergie de pression des gaz est donc récupérée de cette façon. Comme on l'a mentionné, une partie importante de leur énergie calorifique est récupérée dans les échangeurs de chaleur 16 et 26 pour améliorer le rendement des turbomoteurs 10 et 20. D'autres moyens de prise de puissance, comme des engrenages, ou des moyens placés ailleurs sur les turbomoteurs 10 et 20, qui en sortiraient par exemple latéralement plutôt que dans le prolongement des arbres reliant les turbines aux compresseurs, sont envisageables.

La figure 2A illustre une variante de réalisation où les arbres de prise de puissance ne sont pas dirigés en sens opposés à partir des turbines libres 32 ou 33 mais dans le même sens, l'un d'eux, référencé par 36 au lieu de 35, traversant le turbomoteur 20 auquel il est associé en s'étendant dans un jeu central 53 de celui-ci, qui traverse tout son rotor ; les charges 30 et 31 peuvent alors être voisines.

Une évolution de cette conception, donnée à la figure 2B, consisterait à remplacer les charges 30 et 31 par une charge 37 unique, raccordée aux deux arbres de prise de puissance 34 et 36 par une boîte d'engrenages 38 de manière à capter la puissance transmise par ces deux arbres à la fois. La figure 2C représente une variante où les arbres de prise de puissance 34 et 35 sont ceux de la figure 2, mais sont tous deux raccordés à un arbre de sortie 39 unique d'une charge 37 unique par des engrenages droits, ou d'autres organes de transmission de puissance, espacés sur cet arbre de sortie 39. Une telle disposition à deux engrenages droits pourrait être adaptée pour la boîte de vitesses 38.

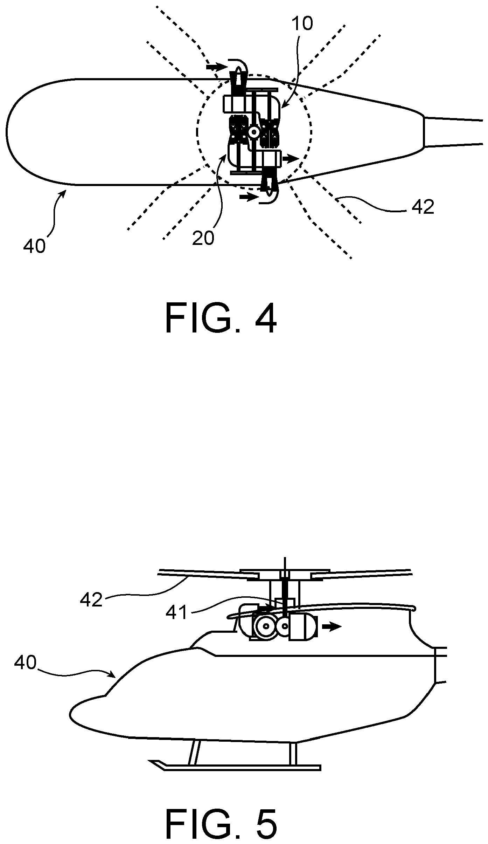

Une réalisation caractéristique de l'invention sera maintenant décrite en liaison aux figures 3, 4 et 5. Le dispositif est ici appliqué à la sustentation et à la propulsion d'un hélicoptère 40. Les turbomoteurs 10 et 20 sont placés immédiatement sous le plafond de l'habitacle de l'appareil en entourant l'arbre 41 de l'hélice 42 de sustentation au-dessus de l'habitacle. Comme dans la figure 2, on retrouve des turbines libres 32 et 33 dans chacune des canalisations coudées 19 et 29 des turbomoteurs 10 et 20, et des arbres de prise de puissance 34 et 35 finissant hors des turbomoteurs 10 et 20 et par lesquels la puissance captée par les turbines libres 32 et 33 peut être recueillie. On y parvient au moyen de transmissions 43 et 44 comprenant chacune, à partir de l'arbre de prise de puissance 34 ou 35 respectif, un engrenage droit 45 ou 46, un arbre de transmission 47 ou 48 et un engrenage à angle droit 49 commun aux deux transmissions 43 et 44 et relié rigidement à l'arbre d'hélice 41. Les arbres de prise de puissance 34 et 35 sont parallèles l'un à l'autre et coaxiaux aux parties principales des turbomoteurs 10 et 20, en amont des canalisations coudées 19 et 20, et aux arbres entraînant les compresseurs et les turbines jusqu'à la turbine à basse pression 18. Les arbres de transmission 47 et 48 sont parallèles aux arbres de prise de puissance 34 et 35 et s'étendent entre eux et dans le prolongement l'un de l'autre, jusqu'à une région centrale du dispositif qu'entourent les turbomoteurs 10 et 20. L'arbre d'hélice 41 passe dans cette région centrale en s'étendant perpendiculairement au plan principal dans lequel s'étendent les turbomoteurs 10 et 20 (ce plan est horizontal dans l'application présente à un hélicoptère, et l'arbre d'hélice 41 est vertical, quand l'hélicoptère n'est pas incliné). L'engrenage à angle droit 49 comprend une roue 50 faisant tourner l'arbre d'hélice 41, et deux pignons dentés 51 et 52 solidaires des arbres de transmission 47 et 48 et engrenant tous deux avec la roue 50. Grâce à cette disposition, l'arbre d'hélice passe entre les turbomoteurs 10 et 20 et notamment leurs parties principales, entre les canalisations coudées 19 et 29, et entre les axes des arbres de prise de puissance 34 et 35 ; il s'étend dans une direction perpendiculaire à ces constituants, qui sont tous horizontaux. L'agencement est ainsi bien compact. Il peut être complètement symétrique, les arbres de transmission 47 et 48 étant en prolongement; ils tournent alors en sens de rotation opposés l'un à l'autre, de même que les arbres de prise de puissance 34 et 35 et les rotors des turbomoteurs 10 et 20; cela est compatible avec des turbomoteurs 10 et 20 semblables car ils sont orientés en sens opposés.

La mise en route des turbomoteurs 10 et 20 fait tourner les turbines libres 32 et 33, et les arbres de transmission 47 et 48 pour que les transmissions 43 et 44 entraînent ensemble l'arbre d'hélice 41. En cas de défaillance d'un des deux turbomoteurs 10 et 20, le dispositif permet de maintenir la puissance nécessaire à l'hélicoptère, mais avec un rendement thermique inférieur au fonctionnement nominal. Dans une telle situation critique, l'économie du turbomoteur subsistant ne présente pas d'importance.

Un avantage qui est spécifique à cet agencement est la possibilité d'utiliser le turbomoteur défaillant même si un débit de carburant est coupé. En faisant référence à la figure 2, si on a un cas de panne sur le turbomoteur 20 et que son débit de carburant est coupé, le turbomoteur 10 fonctionne encore à pleine puissance. Par conséquent, dans l'échangeur de chaleur 16 on a un échange de chaleur entre le flux chaud sortant de la turbine 32 et le flux froid du turbomoteur 20 (un débit massique très faible). Par conséquent, le turbomoteur 20 va être mis en mouvement seulement par le transfert énergétique dans l'échangeur de chaleur 16. En fonction des performances de l'échangeur de chaleur 16 (en termes d'efficacité et perte de charge), la turbine libre 33 peut être amenée à produire de la puissance mécanique utile si elle n'est pas freinée par un dispositif dédié, sans brûler du carburant dans la chambre du turbomoteur 20. Dans ce mode dégradé de fonctionnement, le turbomoteur 20 devient un système de récupération d'énergie auxiliaire au turbomoteur 10. Ainsi, le dispositif de l'invention peut travailler en multi-rotor ou mono-rotor pour propulseur l'hélicoptère 40.

Le mode de réalisation décrit précédemment conviendrait à d'autres applications, autres que pour la propulsion d'un hélicoptère et la génération d'énergie électrique.

Les turbomoteurs des différents modes de réalisation peuvent être semblables, ce qu'on a représenté ici, ou non.

## Revendications

1. Agencement de turbomoteurs comprenant deux turbomoteurs (10, 20) dont chacun comprend une section froide (11, 21) comprenant un ou plusieurs compresseurs, axiaux ou centrifuges, mécaniquement liés ou pas, en amont d'une chambre de combustion (12, 22) et une section chaude (13, 23) comprenant une ou plusieurs turbines, axiales ou centripètes, en aval de la chambre de combustion, dans lequel les turbomoteurs sont couplés par deux échangeurs de chaleur (16, 26), un premier des échangeurs de chaleur (16) mettant en relation d'échange thermique un flux d'air sortant de la section froide (11) d'un premier des turbomoteurs et un flux des gaz sortant de la section chaude (23) d'un second des turbomoteurs, un second des échangeurs des chaleur (26) mettant en relation d'échange thermique le flux des gaz sortant de la section chaude (13) du premier des turbomoteurs et le flux d'air sortant de la section froide (21) du second des turbomoteurs, les axes de rotation des turbomoteurs (10, 20) sont parallèles et les sens de l'écoulement des flux le long des turbomoteurs sont opposés, les turbomoteurs comprennent chacun un dispositif de prise de puissance, l'agencement étant **caractérisé en ce qu'**il comprend un arbre moteur (41) relié à chacun des dispositifs de prise de puissance par une transmission (43, 44) mécanique respective comprenant chacune un arbre de transmission (47, 48), les arbres de transmission (47, 48) étant en prolongement et **en ce que** l'arbre moteur (41) s'étend entre les arbres de transmission et entre les parties principales des turbomoteurs dans une direction perpendiculaire aux turbomoteurs (10, 20), et **en ce que** les turbomoteurs comprennent chacun une turbine libre (32, 33) dans la section chaude, sans liaison mécanique avec la section froide, mais comprenant un arbre (34, 35) du dispositif de prise de puissance sortant des turbomoteurs.

2. Agencement de turbomoteurs selon la revendication 1, **caractérisé en ce qu'**il constitue un propulseur d'hélicoptère où les turbomoteurs (10, 20) sont placés horizontalement sous un plafond de l'hélicoptère (40) et l'arbre moteur (41) est un arbre d'hélice (42).

3. Agencement des turbomoteurs selon la revendication 1, **caractérisé en ce que** chacun des échangeurs de chaleur est placé entre un dernier des compresseurs (15, 25) et la chambre de combustion (12, 22) d'un des turbomoteurs, et à un échappement (19, 29) en aval d'une dernière des turbines (18, 28) de l'autre des turbomoteurs.

4. Agencement de turbomoteurs selon la revendication 1, **caractérisé en ce que** les turbomoteurs (10, 20) ont les échappements (19, 29) en canalisations coudées à coude unique, la canalisation coudée de chacun des turbomoteurs croisant l'autre des turbomoteurs.

5. Agencement de turbomoteurs selon la revendication 1, **caractérisé en ce que** les arbres de prise de puissance sont parallèles avec les sens de rotation opposés et avec des zones de transmission de puissance (45, 46) spatialement décalées.

## Patentansprüche

1. Anordnung von Turbomotoren mit zwei Turbomotoren (10, 20), von denen jeder einen kalten Abschnitt (11, 21) aufweist mit einem oder mehreren Verdichtern, axial oder zentrifugal, mechanisch verbunden oder nicht, stromaufwärts von einer Brennkammer (12, 22) und einen heißen Abschnitt (13, 23) mit einer oder mehreren Turbinen, axial oder zentripetal, stromabwärts der Brennkammer, in der die Turbomotoren durch zwei Wärmetauscher (16, 26) gekoppelt sind, wobei ein erster der Wärmetauscher (16) einen aus dem kalten Abschnitt (11) eines ersten der Turbomotoren kommenden Luftstrom und einen aus dem heißen Abschnitt (23) eines zweiten der Turbomotoren kommenden Gasstrom in Wärmeaustauschbeziehung bringt, einen zweiten Wärmetauscher (26), der den aus dem heißen Abschnitt (13) des ersten Turbomotors austretenden Gasstrom und den aus dem kalten Abschnitt (21) des zweiten Turbomotors austretenden Luftstrom in Wärmeaustauschbeziehung bringt, wobei die Drehachsen der Turbomotoren (10, 20) parallel sind und die Strömungsrichtungen der Ströme entlang der Turbomotoren entgegengesetzt sind, die Turbomotoren jeweils eine Abtriebsvorrichtung umfassen, wobei die Anordnung **dadurch gekennzeichnet ist, dass** sie eine Antriebswelle (41) umfasst, die mit jeder der Abtriebsvorrichtungen durch ein entsprechendes mechanisches Getriebe (43, 44) verbunden ist, das jeweils eine Getriebewelle (47, 48) umfasst, wobei die Getriebewellen (47, 48) in Verlängerung liegen, und wobei sich die Antriebswelle (41) zwischen den Getriebewellen und zwischen den Hauptteilen der Turbomotoren in einer zu den Turbomotoren (10, 20) senkrechen Richtung erstreckt, und wobei die Turbomotoren jeweils eine freie Turbine (32, 33) im Heißteil, ohne mechanische Verbindung zum Kaltteil, jedoch mit einer Welle (34, 35) der Abtriebsvorrichtung, die von den Turbomotoren kommt, umfassen.

2. Anordnung von Turbomotoren nach Anspruch 1, **dadurch gekennzeichnet, dass** es sich um eine Hubschrauber-Antriebseinheit handelt, bei der die Turbomotoren (10, 20) horizontal unter einer Hubschrauberdecke (40) angeordnet sind und die Antriebswelle (41) eine Propellerwelle (42) ist.

3. Anordnung von Turbomotoren nach Anspruch 1, **dadurch gekennzeichnet, dass** jeder der Wärmetauscher zwischen einem letzten der Verdichter (15, 25) und der Brennkammer (12, 22) eines der Turbomotoren und an einem Auspuff (19, 29) stromabwärts einer letzten der Turbinen (18, 28) des anderen der Turbomotoren angeordnet ist.

4. Anordnung von Turbomotoren nach Anspruch 1, **dadurch gekennzeichnet, dass** die Turbomotoren (10, 20) die Auspuffrohre (19, 29) in gebogenen Leitungen mit einer einzelnen Biegung haben, wobei die gebogene Leitung jedes der Turbomotoren die andere der Turbomotoren kreuzt.

5. Anordnung von Turbomotoren nach Anspruch 1, **dadurch gekennzeichnet, dass** die Abtriebswellen parallel mit entgegengesetzten Drehrichtungen und mit räumlich versetzten Kraftübertragungsbereichen verlaufen (45, 46).

## Claims

1. Arrangement of turboshaft engines, comprising two turboshaft engines (10, 20), each of which comprises a cold section (11, 21) comprising one or more axial-flow or centrifugal-flow compressors, which may or may not be mechanically linked, upstream of a combustion chamber (12, 22) and a hot section (13, 23) comprising one or more axial-flow or inward-flow turbines, downstream of the combustion chamber, wherein the turboshaft engines are coupled by two heat exchangers (16, 26), a first of the heat exchangers (16) bringing an output airflow from the cold section (11) of a first of the turboshaft engines into a heat exchanging relationship with an output gas stream from the hot section (23) of a second of the turboshaft engines, and a second of the heat exchangers (26) bringing the output gas stream from the hot section (13) of the first of the turboshaft engines into a heat exchanging relationship with the output airflow from the cold section (21) of the second of the turboshaft engines, the rotational axes of the turboshaft engines (10, 20) are parallel and the directions of stream flow along the turboshaft engines are opposite, each of the turboshaft engines comprises a power take-off device taking power, the arrangement being **characterised in that** it comprises a drive shaft (41) connected to each of the power take-off devices by a respective mechanical transmission (43, 44), each comprising a transmission shaft (47, 48), the transmission shafts (47, 48) being in the continuation of one another and **in that** the drive shaft (41) extends between the transmission shafts and between the main parts of the turboshaft engines in a direction that is perpendicular to the turboshaft engines (10, 20), and the turboshaft engines comprises a free turbine (32, 33) in the hot section, without any mechanical link with the cold section, however comprising a power take-off shaft (34, 35) of the device taking power from the turboshaft engines.

2. Arrangement of turboshaft engines according to claim 1, **characterised in that** it constitutes a helicopter powerplant wherein the turboshaft engines (10, 20) are placed horizontally beneath a ceiling of the helicopter (40) and the drive shaft (41) is a propeller shaft (42).

3. Arrangement of the turboshaft engines according to claim 1, **characterised in that** each of the heat exchangers is placed between a last of the compressors (15, 25) and the combustion chamber (12, 22) of one of the turboshaft engines, and at an exhaust (19, 29) downstream of a last of the turbines (18, 28) of the other of the turboshaft engines.

4. Arrangement of turboshaft engines according to claim 1 **characterised in that** the exhausts (19, 29) of the turboshaft engines (10, 20) are formed by bent pipes having a single bend, the bent pipe of each of the turboshaft engines crossing the other of the turboshaft engines.

5. Arrangement of turboshaft engines according to claim 1, **characterised in that** the power take-off shafts are parallel with opposite directions of rotation and with areas of power transmission (45, 46) that are spatially offset from one another.
